# EUROPEAN PATENT SPECIFICATION

(11) **EP 2 569 960 B1**
(45) Date of publication and mention of the grant of the patent: **10.10.2018**
(21) Application number: 11718042.2
(22) Date of filing: 03.05.2011
(51) Int. Cl.: H04W 4/14

(54) **IMPROVED DELIVERY OF SHORT MESSAGES**
VERBESSERTE ZUSTELLUNG VON KURZNACHRICHTEN
DIFFUSION AMÉLIORÉE DE MESSAGES COURTS

(30) Priority: 12.05.2010 WO PCT/EP2010/056559
(43) Date of publication of application: 20.03.2013
(73) Proprietor: Nokia Solutions and Networks Oy, 02610 Espoo (FI)
(72) Inventor: WIEHE, Ulrich, 36251 Bad Hersfeld (DE); VARGA, Jozsef, H-7985 Nagydobsza (HU)
(74) Representative: Borgström, Markus
(86) International application number: PCT/EP2011/057003
(87) International publication number: WO 2011/141319

(56) References cited:
- WO-A1-03/019884
- VODAFONE: "Prevention of Timeout in IP-SM-GW", 3GPP DRAFT; C4-100618, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. San Francisco, US; 20100222, 2 March 2010 (2010-03-02), XP050411235, [retrieved on 2010-03-02]
- NOKIA SIEMENS NETWORKS: "Prevention of Timeout in IP-SM-GW", 3GPP DRAFT; C4-101993 CR 29002-920 SMS TIMEOUT PREVENTION FINAL V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Xian; 20100823, 13 August 2010 (2010-08-13), XP050447182, [retrieved on 2010-08-13]
- 3GPP: "3GPP TS 29.002 v9.1.0 (2010-03) 3rd Generation Partnership Project; Technical Specification Group Core Network and Terminals; Mobile Application Part (MAP) specification (Release 9)", , 6 April 2010 (2010-04-06), pages 1,2,212-225,402-407,697-726, XP000002657801, Retrieved from the Internet: URL:http://www.3gpp.org/ftp/Specs/html-inf o/29002.htm [retrieved on 2011-08-29]
- NOKIA SIEMENS NETWORKS ET AL: "Prevention of Timeout in IP-SM-GW", 3GPP DRAFT; C4-102250, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Xian; 20100823, 27 August 2010 (2010-08-27), XP050447402, [retrieved on 2010-08-27]

## Description

### FIELD OF THE INVENTION

The exemplary and non-limiting embodiments of this invention relate generally to telecommunications and more specifically to delivery and processing of short messages.

### BACKGROUND ART

Messaging is generally used in telecommunications to refer to a set of features that let a user to create, store, send, receive, and manage different types of messages, for example, text messages, multimedia messages, e-mail messages, paging messages and fax messages. Messaging covers applications which are typically based on store and forward, store and retrieve, or store and push functions, and do not necessarily require real-time transport capabilities.

Short message service SMS is a store-and-forward messaging technology that operates in near-real-time mode. The SMS is realised by the use of the Mobile Application Part (MAP) of the Signalling System 7 (SS7) protocol, with Short Message (SM) protocol elements being transported across the network as fields within the MAP messages. These MAP messages may be transported using traditional time-division multiplexing based signalling, or over Internet Protocol (IP) using signalling transport (SIGTRAN) protocol and an appropriate adaptation layer. A short message refers to a message of limited length, which may be sent between mobile stations, e-mail systems, computers, and voice frequency phones that support SMS.

The short message service is a telecommunication service for sending and receiving text messages, and it was initially defined in the standards for Global System for Mobile Communications (GSM). Today short message service is available on most digital cellular telephone networks, e.g. for Universal Mobile Telecommunications System (UMTS), and also in some paging systems. An example of short message service is specified in the 3rd Generation Partnership Project (3GPP) specifications: TS 23.040 V9.2.0 (2010-03) "Technical realization of the Short Message Service" and TS 23.204 V10.0.0 (2010-03) "Support of Short Message Service (SMS) over generic 3GPP Internet Protocol (IP) access". MAP protocol is specified in 3GPP TS 29.002 V9.1.0 (2010-03). SMS is also applicable in Long Term Evolution (LTE) networks, where LTE is used as IP access and it performs SMS over IP, or by using the Circuit Switched (CS) fallback function as specified in 3GPP TS 23.272 V9.3.0 "Circuit Switched (CS) fallback in Evolved Packet System (EPS)"

According to the specifications, the Short Message Service comprises two basic services, Short Message Mobile Terminated (SM MT) and Short Message Mobile Originated (SM MO). SM MT denotes the capability of the mobile communication system to transfer a short message submitted from the SMS Service Centre (SMS-SC) to a mobile station (MS) / user equipment (UE), and to provide information about the delivery of the short message either by a delivery report or a failure report with a specific mechanism for later delivery. SM MO denotes the capability of the communications system to transfer a short message submitted by the UE to a short message entity via SMS SC, and to provide information about the delivery of the short message either by a delivery report or a failure report.

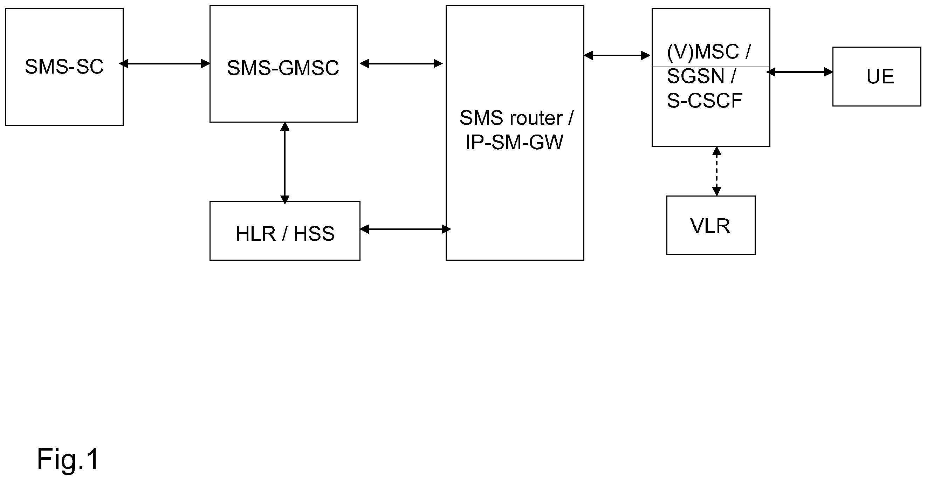

A system for the delivery of SM MT is illustrated in figure 1. A Protocol Data Unit (PDU) containing the text message is passed to a SMS-SC for storing, and subsequent forwarding to the destination address. At a defined time, SMS-SC transmits the message to Mobile Switching Centre for Short Message Service (SMS-GMSC) towards the receiving user equipment (UE). SMS-GMSC interrogates Home Location Register (HLR) or Home Subscriber Server (HSS) of the receiving subscriber for routing information, and transfers the short message to the next node using the routing information obtained from the HLR/HSS.

Delivery of a short Message from the SMS-GMSC to the UE can take different routes: (a) via circuit switched (CS) domain i.e. from SMS-GMSC to visited mobile switching centre (VMSC) to UE, (b) via packet switched (PS) domain i.e. from SMS-GMSC to serving gateway support node (SGSN) to UE, or (c) via an SMS Router. In case of VMSC, reception of the short message causes the VMSC to retrieve from Visitor Location Register (VLR) location area address of the receiving subscriber. If the retrieval is successful, VMSC transfers the short message to UE that acknowledges the reception with a delivery report. In case of SGSN, VLR does not need to be consulted.

SMS Router is an optional entity, and is essentially used only in the MT case. It has been included in the configuration due to issues of misusage (e.g. fraud issues of SMS faking and distribution of junk mail), and new regulatory requirements that public mobile networks must meet (e.g. Number Portability and Lawful Interception). SMS Router may also include IP Short Message Gateway (IP-SM-GW) functionality providing the protocol interworking for delivery of the short message between the IP-based UE and the SMS-SC. Therefore, delivery via the SMS Router (c) may include three possible routes: (c1) from SMS-GMSC to SMS Router to VMSC to UE, or (c2) from SMS-GMSC to SMS Router to SGSN to UE, or (c3) - if the SMS Router has IP-SM-GW functionality - from SMS-GMSC to SMS Router / IP-SM-GW to S-CSCF to UE, i.e. via Internet Multimedia Subsystem (IMS) domain.

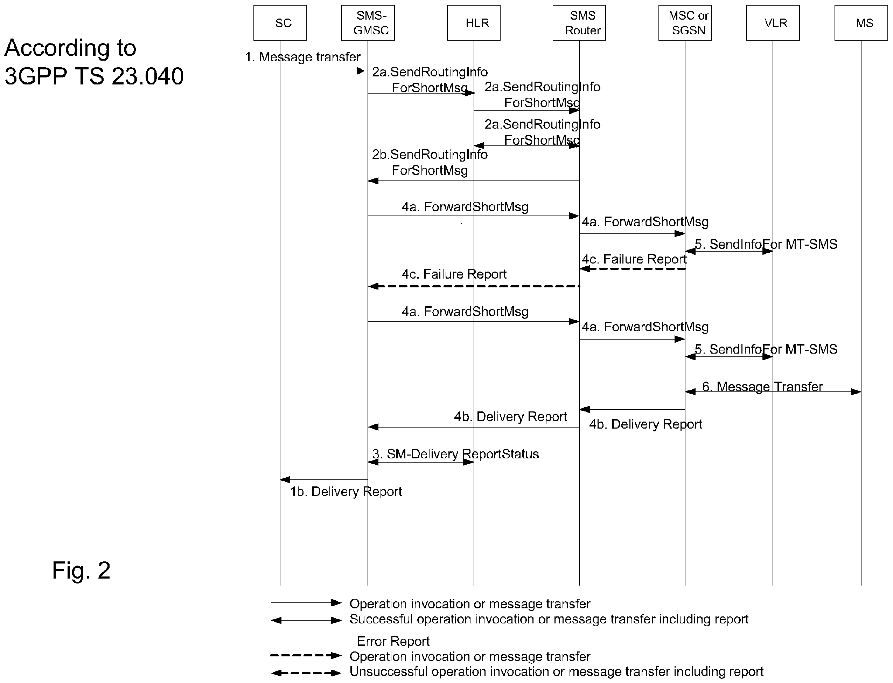

In case (c), where the short message is sent from the SMS-GMSC to an SMS Router / IP-SM-GW, the SMS Router / IP-SM-GW performs a "domain selection" in order to decide on the further route of the short message (c1, c2, or c3). When the SMS Router / IP-SM-GW detects that the short message was successfully delivered, it returns a positive response to the SMS-GMSC. When a short message fails to reach the UE via the selected domain (e.g. via VMSC of CS domain, c1), a failure delivery report is returned to the SMS Router / IP-SM-GW. SMS Router / IP-SM-GW may retry to deliver the short message via an alternative route (e.g. via SGSN of PS domain, c2). This is illustrated in figure 2, taken from 3GPP TS 23.040. When this retry also fails, the SMS Router / IP-SM-GW may retry via the 3rd route (e.g. via S-CSCF of IMS access, c3). It may also decide not to perform further retries via alternative routes (e.g. because all alternatives have been tried); it then returns a negative response to the SMS-GMSC. The order in which domains are selected for message delivery is subject to operator policy and/or user preferences.

When the SMS-GMSC forwards the short message to the "next node" (e.g. SMS Router / IP-SM-GW), it starts a short message delivery timer, i.e. a supervision timer for receiving a (positive or negative) response. The value of the timer may be implementation specific. If the selected value for the timer in the SMS-GMSC is too short this may result in a situation when the short message is successfully delivered (e.g. by the first retry) but the SMS-GMSC believes that it was not, resulting in wrong charging or in double delivery. To avoid this, the SMS Router / IP-SM-GW could decide, not to do the retry (or the 2nd retry), but this may result in situations where the short message could have been delivered by the retry, possibly even in time, i.e. before the supervision timer in the SMS-GMSC expires, but it was not, thus delaying the delivery of the short message to the user. Too long timer value may result in waste of resources in the SMS-GMSC (e.g. if the supervised message is lost).

3GPP TSG CT4 Meeting #48, San Francisco, 22 to 26 February 2010, CHANGE REQUEST 29.002 CR 0957, discloses a short message delivery timer (SM Delivery Timer) parameter which is capable of indicating an SM Delivery Timer value set in a Mobile Switching Centre for Short Message Service (SMS-GMSC) to an IP Short Message Gateway (IP-SM-GW) in order to aid in a domain selection procedure.

### SUMMARY

It is therefore an object of this invention to overcome some of the above mentioned problems by providing methods, a short message service element, a system, and a computer program product as defined in the independent claims. Further embodiments of the invention are disclosed in the dependent claims.

According to a first aspect of the present invention, there is provided a method comprising a short message service gateway element receiving a message to be delivered to a user equipment, negotiating a timer value with a short message service routing element, forwarding the message to the short message service routing element, and starting a timer according to the negotiated timer value.

In the method, the negotiated timer value may be forwarded to the short message service routing element together with the message.

The negotiating comprises the short message service gateway element sending a request for a timer value proposal to the short message service routing element, receiving a response including a timer value proposal from short message service routing element, and deciding a timer value based on the timer value proposal.

In the method, the deciding may comprise deciding a timer value according to the timer value proposal, or a timer value smaller than the timer value proposal.

In the method, the short message service routing element may comprise a short message service router or an internet protocol short message gateway. The receiving may comprise receiving a response at a short message service gateway mobile switching centre.

In some embodiments, the request for a timer value proposal may further include an indication for support of a timer value re-negotiation mechanism.

In some embodiments, the method may further comprise receiving a request for timer value re-negotiation from the short message service routing element, and sending a response acknowledging timer value re-negotiation to the short message service routing element. The timer value re-negotiation may comprise restarting the timer.

In some embodiments, the method may further comprise deciding a second timer value, and restarting the timer with the second decided timer value, and the response acknowledging timer value re-negotiation may further comprise the decided second timer value.

According to a second aspect of the present invention, there is provided a method comprising a short message service routing element receiving a request for a timer value proposal from a short message service gateway element, deriving a timer value proposal, and sending a response including the timer value proposal to the short message service gateway element.

In some embodiments, the deriving may be based on the number and sort of available delivery routes.

In some embodiments, the request for a timer value proposal may further include an indication for support of a timer value re-negotiation mechanism, and the method may further comprise sending a request for a timer value re-negotiation to the short message service gateway element, and receiving a response acknowledging timer value re-negotiation from the short message service gateway element. The timer value re-negotiation may comprise restarting the timer.

In some embodiments, the request for a timer value re-negotiation may further comprise a second proposed timer value.

In some embodiments, at least one of the requests and responses may comprise a mobile application part protocol message.

According to a third aspect of the present invention, there is provided a system comprising the short message service gateway element and the short message service routing element.

According to a fourth aspect of the present invention, there is provided a computer program product containing an executable code configured to perform a method according to any embodiment of the invention when executed in a computing device.

Embodiment of the present invention may have one or more of following advantages:
- More efficient use of resources in the SMS-GMSC and SMS Router / IP-SM-GW
- Shorter delivery time of a short message from an SMS SC to a UE
- More reliable delivery of a short message from an SMS SC to a UE
- Avoidance of double delivery of a short message from an SMS SC to a UE
- More accurate charging and better user experience

### BRIEF DESCRIPTION OF THE DRAWINGS

In the following the invention will be described in greater detail by means of exemplary embodiments with reference to the attached drawings, in which:
Figure 1 shows a simplified block diagram of a system for the delivery of SM MT short message.
Figure 2 shows a SM MT short message transfer attempt failing over the first path (e.g. SGSN) and succeeding over the second path (e.g. MSC), as described in 3GPP TS 23.040.
Figure 3 shows a simplified block diagram of an embodiment of the invention.
Figure 4 shows a method according to an embodiment of the invention.

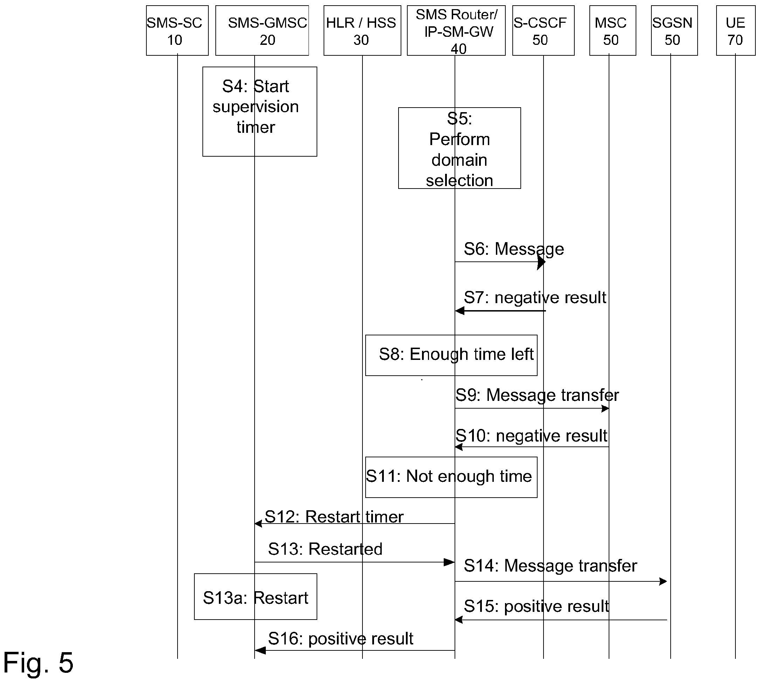

Figure 5 shows a method according to a further embodiment of the invention.

### DETAILED DESCRIPTION OF SOME EMBODIMENTS

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any node for any communication system or any combination of different communication systems that support a messaging service. The communication system may be a fixed communication system or a wireless communication system or a communication system utilizing both fixed networks and wireless networks. The messaging service may apply to different types of messages, for example, text messages, multimedia messages, e-mail messages, paging messages and fax messages. The protocols and specifications of communication systems, servers and user terminals, especially in wireless communication, develop rapidly. Such development may require additional changes to an embodiment. Therefore, all words and expressions should be interpreted broadly and they are intended to illustrate, not to restrict, the embodiment.

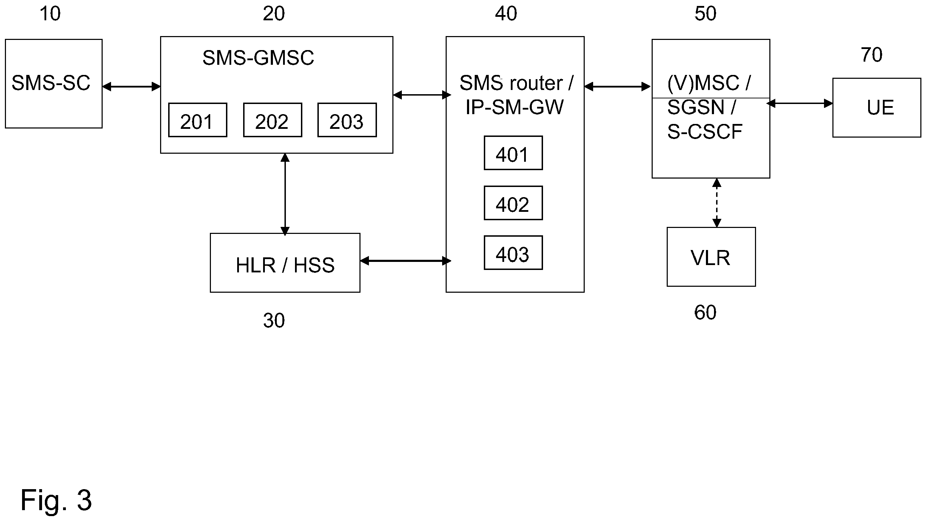

Figure 3 shows a simplified block diagram illustrating elements used for the SM MT short message transfer from an SMS-SC 10 to a UE 70 in an exemplary system architecture. SMS-SC 10 is a function responsible for the relaying and store-and-forwarding of a short message. The SMS-SC is not a part of the GSM/UMTS Public Land Mobile Network (PLMN); however MSC and SC may be integrated.

SMS-GMSC 20 is a function of an MSC capable of receiving a short message from an SMS-SC, interrogating an HLR/HSS for routing information and SMS info, and delivering the short message to the next node on the route to the recipient UE. HLR/HSS 30 is a central database that contains details of each mobile phone subscriber that is authorized to use the GSM/UMTS/IMS core network.

SMS Router / IP-MS-GW 40 is an element performing a domain selection in order to decide on the further route of the short message, delivering the short message to VMSC/SGSN/S-CSCF 50 and returning a (positive/negative) delivery response to the SMS-GMSC 20. IP-SM-GW capability in SMS Router is a function responsible for protocol interworking between the IP-based UE and the SMS-SC 10. VMSC/SGSN/S-CSCF 50 is a control function which performs signaling functions for mobile stations currently served by the MSC/SGSN/S-CSCF. VLR 60 is a database in GSM system storing information about all the mobiles that are currently under the jurisdiction of the MSC which it serves and it is interrogated by VMSC 50.

A mobile station, user equipment UE 70, represents here a mobile device. Together with the software, applications, and content that are directly related to it, the device functions within and is supported by mobile infrastructure of the applied communications network. For short message service support the UE 70 is configured to communicate via the communications system with a short message service centre SMS-SC 10 and exchange short message transfer protocol data units (SMS PDUs) with it.

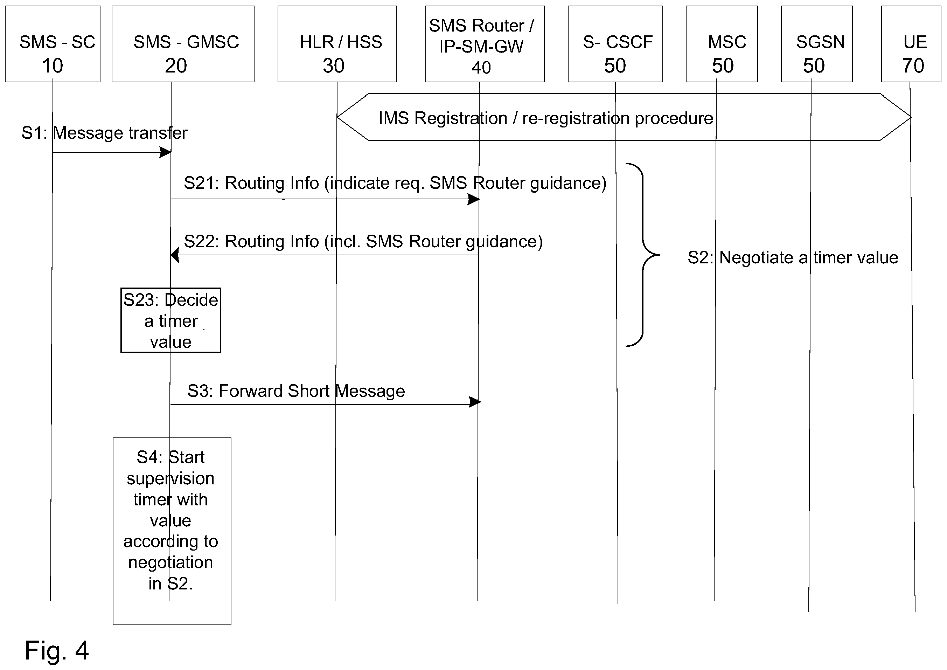

In a method according to an embodiment of the invention, the SMS-SC 10 may receive a short message to be transferred to UE 70 and forward the short message to SMS-GMSC 20. As shown in steps S1-S4 of an embodiment illustrated in Figure 4, SMS-GMSC 20 may receive S1 the short message to be delivered to UE 70, negotiate S2 a timer value with SMS Router / IP-SM-GW 40, forward S3 the short message to the Router / IP-SM-GW 40 and start S4 a timer according to the negotiated timer value.

The negotiating S2 may comprise SMS-GMSC 20 sending S21 to SMS Router / IP-SM-GW 40 a message "MAP_SEND_ROUTING_INFO_FOR_SM" request including an indication that SMS Router guidance for timer value is expected. The indication may take a form of a parameter in the message. The parameter may be e.g. "sm-RouterGuidanceIndicator" indicating whether or not the SMS-GMSC 20 is prepared to receive SMS-Router guidance in the response and it may take value "timerNegotiationSupported". Examples of corresponding short message data types for MAP protocol are illustrated below, the new parts in italic font.

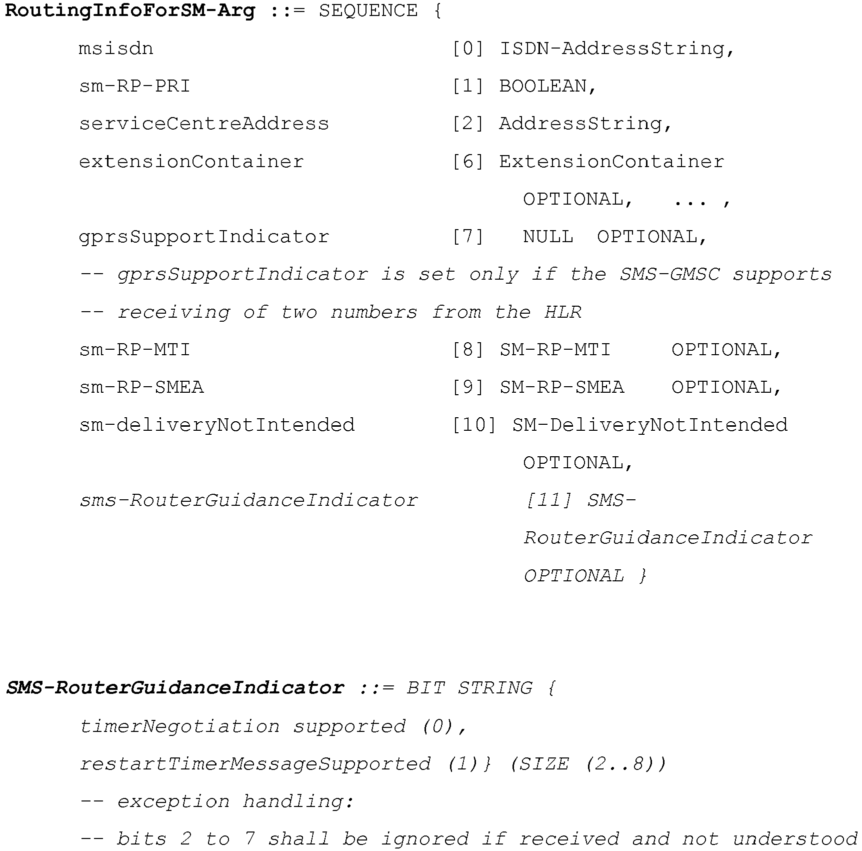

SMS Router / IP-SM-GW 40 may derive a timer value proposal, e.g. based on the number and sort of available delivery routes or on support/non-support of the timer value re-negotiation mechanism, and send it as SMS Router guidance to SMS-GMSC 20. In step S22, SMS-GMSC 20 may receive a message "MAP_SEND_ROUTING_INFO_FOR_SM" response including SMS Router guidance for timer value from SMS Router / IP-SM-GW 40. The guidance may take a form of a parameter in the message and be an integer value proposing a timer value. The parameter may be e.g. "sm-RouterGuidance" and it may be defined as "SM-DeliveryTimeValue" value. Examples of corresponding short message data types for MAP protocol are illustrated below, the new parts in italic font.

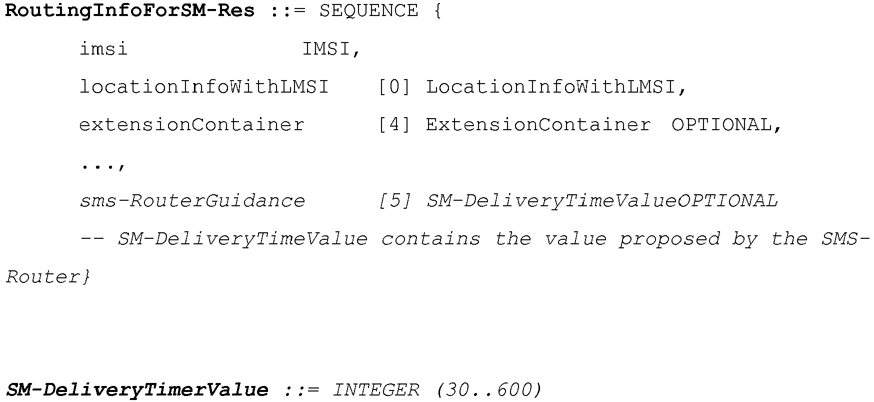

In step S23, SMS-GMSC 20 may decide a timer value based on the SMS Router guidance. SMS-GMSC 20 may decide a timer value corresponding to the proposed SMS Router guidance integer value in "MAP_SEND_ROUTING_INFO_FOR_SM" response or it may decide a value smaller than the proposed integer value. In step S4, SMS-GMSC 20 may send a message "MAP_MT_FORWARD_SHORT_MESSAGE" to SMS Router / IP-SM-GW 40 including the short message to be forwarded and the decided timer value. The decided timer value may take a form of a parameter in the message and be an integer value. The parameter may be e.g. "sm-DeliveryTimer" and it may be defined as "SM-DeliveryTimeValue" value. Examples of corresponding short message data types for MAP protocol are illustrated below, the new parts in italic font.

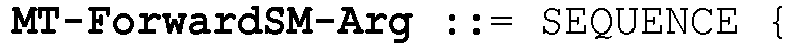

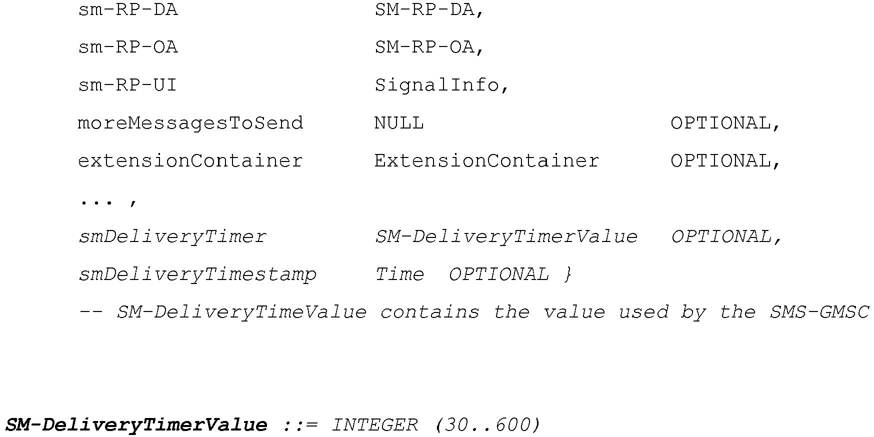

In a further method according to the invention, the message "MAP_SEND_ROUTING_INFO_FOR_SM" request of step S21 may further include an indication that a timer value re-negotiation mechanism is supported. The indication may take a form of a parameter in the message. The parameter may be e.g. "sm-RouterGuidanceIndicator" indicating whether or not the SMS-GMSC 20 is prepared to re-negotiate the timer value and it may take value "restartTimerMessageSupported". In the embodiment, SMS Router / IP-MS-GW 40 may derive a timer value proposal based also on the support/non-support of the re-negotiation mechanism as indicated by the SMS-GMSC 20.

The message "MAP_SEND_ROUTING_INFO_FOR_SM" request of step S21 may, in some embodiments, only include an indication that a timer value re-negotiation mechanism is supported and no request that SMS Router guidance for timer value is expected. Thus, timer value re-negotiation mechanism may also be used independently even though no timer value negotiation in step S2 has been done. The indication may take a form of a parameter in the message.

When SMS-GMSC 20 sends to SMS Router / IP-SM-GW 40 the message "MAP_MT_FORWARD_SHORT_MESSAGE" including the short message to be forwarded, it may also start S4 the timer. SMS Router / IP-SM-GW 40 may receive the message, perform a domain selection S5 in order to decide on the further route of the short message and forward S6 the message to MSC, SGSN or S-SFSC 50 depending on the selected route.

If the delivery of the short message is successful, SMS Router / IP-SM-GW 40 may return a positive response to the SMS-GMSC 20. If the delivery of the short message fails S7 on the selected route, and if SMS Router / IP-SM-GW 40 may conclude that there is enough time left S8 in the timer for a retry, SMS Router / IP-SM-GW 40 may decide to retry to deliver S9 the short message via an alternative route. However, if SMS Router / IP-SM-GW 40 concludes that there is not enough time left S11 in the timer for a retry, and if "MAP_SEND_ROUTING_INFO_FOR_SM" request of step S21 included an indication that a timer value re-negotiation mechanism is supported, the SMS Router / IP-SM-GW 40 may request S12 SMS-GMSC 20 to re-negotiate the timer value. The re-negotiation may e.g. comprise restarting the timer. The request may be sent as a new MAP message from SMS Router / IP-SM-GW 40 to SMS-GMSC 20. The message may be e.g. "MAP_MT_Forward_SM_INTERMEDIATE_RESULT" or "MAP_RESTART_TIMER". The new MAP message may further contain a proposed timer value with which the supervision timer should be restarted.

SMS Router / IP-SM-GW 40 may also derive and propose a new timer value in the message requesting timer value re-negotiation. SMS-GMSC 20 may receive the MAP message including the request and in one embodiment also the new timer value proposal. SMS-GMSC 20 may decide to restart S13a the timer and sends S13 a response indicating restarting the timer. SMS-GMSC 20 may also decide a new timer value and the response may include the new decided timer value. The deciding may be based on the new proposed timer value received from SMS Router / IP-SM-GW 40.

Figure 3 shows a system and an apparatus according to an embodiment of the invention. A short message service gateway element 20, preferably an SMS-GMSC, may comprise a receiver 201, processor 202 and a transmitter 203. The receiver 201 may receive a short message to be delivered to a UE 70 from SMS-SC 10. The processor 202 may negotiate a timer value with SMS Router / IP-SM-GW 40 and start a timer according to the negotiated timer value. The transmitter 203 may forward the message to be delivered to the UE 70 to the SMS Router / IP-SM-GW 40.

The negotiation may include the transmitter 203 sending a message "MAP_SEND_ROUTING_INFO_FOR_SM" request to SMS Router / IP-SM-GW 40 requesting a timer value proposal. The receiver 201 may receive a message "MAP_SEND_ROUTING_INFO_FOR_SM" response from SMS Router / IP-SM-GW 40 including a timer value proposal and the processor 202 may decide a timer value based on the received timer value proposal. The processor 202 may decide a timer value according to the received timer value proposal or a timer value smaller than the received timer value proposal. The transmitter 203 may forward the decided timer value to SMS Router / IP-SM-GW 40 together with the short message in a "MAP_MT_FORWARD_SHORT_MESSAGE".

In a further embodiment, the message "MAP_SEND_ROUTING_INFO_FOR_SM" request to SMS Router / IP-SM-GW 40 requesting a timer value proposal may also include an indication for support of a timer value re-negotiation mechanism, e.g. restarting the timer. The receiver 201 may receive a message requesting restarting the timer from SMS Router / IP-SM-GW 40. The message may also include a second proposed timer value. The processor 202 may decide to restart the timer and it may decide a new timer value to be used. The transmitter 203 may send a message acknowledging timer value re-negotiation to SMS Router / IP-SM-GW 40. The message may include the new decided timer value.

The message "MAP_SEND_ROUTING_INFO_FOR_SM" request may, in some embodiments, only include an indication that a timer value re-negotiation mechanism is supported and no request that SMS Router guidance for timer value is expected. Thus, timer value re-negotiation mechanism may also be used independently even though no timer value negotiation between the processor 202 and SMS Router / IP-SM-GW 40 has been done. The indication may take a form of a parameter in the message

Figure 3 shows a system and an apparatus also according to another embodiment of the invention. A short message service routing element 40, preferably an SMS Router / IP-SM-GW, may comprise a receiver 401, processor 402 and a transmitter 403. The receiver 401 may receive a message requesting a timer value proposal from a SMS-GMSC 20. The message may be "MAP_SEND_ROUTING_INFO_FOR_SM" request. The processor 402 may derive a timer value proposal, for example based on the number and sort of available delivery routes or on support/non-support of the timer value re-negotiation mechanism. The transmitter 403 may send a message including the timer value proposal to SMS-GMSC 20. The message may be "MAP_SEND_ROUTING_INFO_FOR_SM" response. The receiver 401 may receive a decided timer value from SMS-GMSC 20 together with a short message to be forwarded to a UE 70 in a "MAP_MT_FORWARD_SHORT_MESSAGE".

Te message "MAP_SEND_ROUTING_INFO_FOR_SM" request from SMS-GMSC 20 requesting a timer value proposal may also include an indication for support of a timer value re-negotiation mechanism. When the receiver 401 receives the message "MAP_MT_FORWARD_SHORT_MESSAGE", the processor 402 may perform a domain selection in order to decide on the further route of the short message and the transmitter 403 may forward the message to MSC, SGSN or S-SFSC 50 depending on the selected route.

The message "MAP_SEND_ROUTING_INFO_FOR_SM" request from SMS-GMSC 20 may, in some embodiments, only include an indication that a timer value re-negotiation mechanism is supported and no request that SMS Router guidance for timer value is expected. Thus, timer value re-negotiation mechanism may also be used independently even though no timer value proposal has been derived by the processor 402 in the earlier phase. The indication may take a form of a parameter in the message.

If the delivery of the short message is successful, the transmitter 403 may send a positive response to the SMS-GMSC 20. If the delivery of the short message fails on the selected route, the processor 402 may conclude whether there is enough time left in the timer for a retry. If it concludes that there is enough time, the processor 402 may decide to retry to deliver the short message via an alternative route. However, if it concludes that there is not enough time left, and if "MAP_SEND_ROUTING_INFO_FOR_SM" request included an indication that a timer value re-negotiation mechanism is supported, the transmitter 403 may send a request to SMS-GMSC 20 to re-negotiate the timer value. The re-negotiation may comprise e.g. restarting the timer.

The processor 402 may derive a new timer value proposal based on the number and sort of available delivery routes and on support/non-support of the timer value re-negotiation mechanism as indicated by the SMS-GMSC 20. The transmitter 403 may send a message requesting restarting the timer to SMS-GMSC 20. The message may also include a second proposed timer value. The receiver 401 may receive a message acknowledging timer value re-negotiation from SMS-GMSC 20. The message may include the new decided timer value.

In general, the various embodiments may be implemented in hardware or special purpose circuits, software, logic or any combination thereof. Some aspects may be implemented in hardware, while some other aspects may be implemented in firmware or software, which may be executed by a controller, microprocessor or other computing device. Software routines, which are also called as program products, are articles of manufacture and can be stored in any apparatus-readable data storage medium and they include program instructions to perform particular tasks. The exemplary embodiments of this invention also provide a computer program product, readable by a computer and encoding a computer program of instructions for executing a computer process for controlling functions in an apparatus of Figure 3.

While various aspects of the invention may be illustrated and described as block diagrams, message flow diagrams, flow charts and logic flow diagrams, or using some other pictorial representation, it is well understood that the illustrated units, blocks, apparatus, system elements, procedures and methods may be implemented in, for example, hardware, software, firmware, special purpose circuits or logic, a computing device or some combination thereof. It will be obvious to a person skilled in the art that, as the technology advances, the inventive concept can be implemented in various ways. The invention and its embodiments are not limited to the examples described above but may vary within the scope of the claims.

## Claims

1. A method, comprising:
a short message service gateway element receiving (S1) a message to be delivered to a user equipment (70);
the short message service gateway element forwarding (S3) said message to a short message service routing element (40); and
the a short message service gateway element starting (S4) a timer according to a timer value, the timer value being a short message delivery timer value,
**characterised in that** the method comprises:
the short message service gateway element carrying out a negotiation (S2) with the short message service routing element (40) to determine the timer value as a negotiated timer value in which the short message service gateway element sends (S21) a request for a timer value proposal to the short message service routing element (40), receives (S22) a response including a timer value proposal from the short message service routing element (40), and decides (S23) a timer value based on said timer value proposal.

2. The method according to claim 1, wherein said negotiated timer value is forwarded (S3) to said short message service routing element (40) together with said message.

3. The method according to claim 2, comprising deciding a timer value according to said timer value proposal.

4. The method according to claim 2, comprising deciding a timer value smaller than said timer value proposal.

5. The method according to any of claims 1-4, wherein said short message service routing element (40) comprises a short message service router or an internet protocol short message gateway.

6. The method according to any of claims 1-5, comprising receiving a response at a short message service gateway mobile switching centre (20).

7. The method according to any of claims 2-6, wherein said request for a timer value proposal further includes an indication for support of a timer value re-negotiation mechanism.

8. The method according to any of claims 2-7, further comprising:
receiving (S12) a request for timer value re-negotiation from said short message service routing element (40); and
sending (S13) a response acknowledging timer value re-negotiation to said short message service routing element (40) .

9. The method according to claim 7 or 8, wherein said timer value re-negotiation comprises restarting said timer.

10. The method according to claim 8 or 9, further comprising:
deciding a second timer value; and
restarting said timer with said second decided timer value;
wherein said response acknowledging timer value re-negotiation further comprises said decided second timer value.

11. A method, comprising:
a short message service routing element receiving (S21) a request for a short message delivery timer value proposal from a short message service gateway element (20);
the short message service routing element deriving a short message delivery timer value proposal; and
the short message service routing element sending (S22) a response including said short message delivery timer value proposal to said short message service gateway element (20).

12. The method according to claim 11, wherein said deriving is based on the number and sort of available delivery routes.

13. The method according to any of claims 11 or 12, wherein said request for a timer value proposal further includes an indication for support of a timer value re-negotiation mechanism, the method further comprising:
sending (S12) a request for a timer value re-negotiation to said short message service gateway element (20); and
receiving (S13) a response acknowledging timer value re-negotiation from said short message service gateway element (20) .

14. The method according to claim 13, wherein said timer value re-negotiation comprises restarting said timer.

15. The method according to claim 13 or 14, wherein said request for a timer value re-negotiation further comprises a second proposed timer value.

16. The method according to any of claims 1-15, wherein at least one of said requests and responses comprises a mobile application part protocol message.

17. A short message service element (20) adapted to perform a method according to any of claims 1 to 10 or to any one of claims 11 to 16.

18. A system comprising a short message service gateway element (20) according to claim 17 as it depends on any one of claims 1 to 10 and a short message service routing element (40) according to claim 17 as it depends on any one of claims 11 to 16.

19. A computer program product comprising program code means adapted to perform the steps of a method according to any of claims 1 to 10 or to any one of claims 11 to 17.

## Patentansprüche

1. Verfahren, umfassend:
ein Kurznachrichtenservicegatewayelement, das eine Nachricht empfängt (S1), die an eine Benutzervorrichtung (70) zugestellt werden soll;
Weiterleitung (S3) der Nachricht durch das Kurznachrichtenservicegatewayelement über ein Kurznachrichtenserviceroutingelement (40); und
Starten (S4) eines Timers durch das ein Kurznachrichtenservicegatewayelement nach einem Timerwert, wobei der Timerwert ein Timerwert für die Kurznachrichtenzustellung ist,
**dadurch gekennzeichnet, dass** das Verfahren umfasst:
Ausführen einer Verhandlung (S2) mit dem Kurznachrichtenserviceroutingelement (40) durch das Kurznachrichtenservicegatewayelement, um einen Timerwert als verhandelten Timerwert zu bestimmen, wobei das Kurznachrichtenservicegatewayelement eine Anfrage für einen Timerwertvorschlag an das Kurznachrichtenserviceroutingelement (40) sendet (S21), eine Antwort, die einen Timerwertvorschlag enthält, von dem Kurznachrichtenserviceroutingelement (40) empfängt (S22), und einen Timerwert auf Grundlage des Timerwertvorschlags entscheidet (S23).

2. Verfahren nach Anspruch 1, wobei der verhandelte Timerwert zusammen mit der Nachricht an das Kurznachrichtenserviceroutingelement (40) weitergeleitet (S3) wird.

3. Verfahren nach Anspruch 2, umfassend die Entscheidung über einen Timerwert nach dem Timerwertvorschlag.

4. Verfahren nach Anspruch 2, umfassend die Entscheidung über einen Timerwert, der geringer ist, als der Timerwertvorschlag.

5. Verfahren nach einem der Ansprüche 1 bis 4, wobei das Kurznachrichtenserviceroutingelement (40) einen Kurznachrichtendienstrouter oder ein Internetprotokollkurznachrichtengateway umfasst.

6. Verfahren nach einem der Ansprüche 1 bis 5, umfassend den Empfang einer Antwort an einem mobilen Schaltzentrum (20) eines Kurznachrichtenservicegateways.

7. Verfahren nach einem der Ansprüche 2 bis 6, wobei die Anfrage für einen Timerwertvorschlag ferner eine Angabe umfasst, um einen Neuverhandlungsmechanismus für den Timerwert zu unterstützen.

8. Verfahren nach einem der Ansprüche 2-7, ferner umfassend:
Empfang (S12) einer Anfrage nach einer Neuverhandlung des Timerwerts von dem Kurznachrichtenserviceroutingelement (40); und
Senden (S13) einer Neuverhandlung des Timerwerts für die Antwortbestätigung an das Kurznachrichtenserviceroutingelement (40).

9. Verfahren nach Anspruch 7 oder 8, wobei die Neuverhandlung des Timerwerts den Neustart des Timers umfasst.

10. Verfahren nach Anspruch 8 oder 9, ferner umfassend:
Entscheiden eines zweiten Timerwerts; und
Neustarten des Timers mit dem zweiten beschlossenen Timerwert;
wobei die Neuverhandlung des Timerwerts für die Antwortbestätigung ferner den entschiedenen zweiten Timerwert umfasst.

11. Verfahren, umfassend:
ein Kurznachrichtenserviceroutingelement, das eine Anfrage für einen Vorschlag für den Timerwert der Kurznachrichtenzustellung von einem Kurznachrichtenservicegatewayelement (20) empfängt (S21);
wobei das Kurznachrichtenserviceroutingelement einen Vorschlag für den Timerwert der Kurznachrichtenzustellung ableitet; und
das Kurznachrichtenserviceroutingelement eine Antwort, die den Vorschlag für den Timerwert der Kurznachrichtenzustellung enthält, an ein Kurznachrichtenservicegatewayelement (20) sendet (S22).

12. Verfahren nach Anspruch 11, wobei die Ableitung auf einer Zahl und Sortierung der verfügbaren Zustellungsrouten basiert.

13. Verfahren nach einem der Ansprüche 11 oder 12, wobei die Anfrage für einen Timerwertvorschlag ferner eine Angabe umfasst, um einen Neuverhandlungsmechanismus für den Timerwert zu unterstützen, das Verfahren ferner umfassend:
Senden (S12) einer Anfrage nach einer Neuverhandlung des Timerwerts an das Kurznachrichtenservicegatewayelement (20); und
Empfang (S13) einer Neuverhandlung des Timerwerts für die Antwortbestätigung von dem Kurznachrichtenservicegatewayelement (20).

14. Verfahren nach Anspruch 13, wobei die Neuverhandlung des Timerwerts den Neustart des Timers umfasst.

15. Verfahren nach Anspruch 13 oder 14, wobei die Anfrage nach einer Neuverhandlung des Timerwerts ferner einen zweiten vorgeschlagenen Timerwert umfasst.

16. Verfahren nach einem der Ansprüche 1 bis 15, wobei mindestens eine der Anfragen und Antworten eine mobile Anwendungsteilprotokollnachricht umfasst.

17. Ein Kurznachrichtenserviceelement (20), angepasst zur Ausführung eines Verfahrens nach einem der Ansprüche 1 bis 10 oder einem der Ansprüche 11 bis 16.

18. System, das ein Kurznachrichtenservicegatewayelement (20) nach Anspruch 17, wie es von einem der Ansprüche 1 bis 10 abhängt, und ein Kurznachrichtenserviceroutingelement (40) nach Anspruch 17, wie es von einem der Ansprüche 11 bis_16 abhängt, umfasst.

19. Ein Computerprogrammprodukt, umfassend Programmcodemittel, die angepasst sind, die Schritte eines Verfahrens nach einem der Ansprüche 1 bis 10 oder einem der Ansprüche 11 bis 17 auszuführen.

## Revendications

1. Procédé, comprenant :
un élément de passerelle de service de messages courts qui reçoit (S1) un message qui doit être délivré à un équipement d'utilisateur (70) ;
l'élément de passerelle de service de messages courts transférant (S3) ledit message à un élément de routage de service de messages courts (40) ; et
l'élément de passerelle de service de messages courts démarrant (S4) un temporisateur conformément à une valeur de temporisateur, la valeur de temporisateur étant une valeur de temporisateur de délivrance de messages courts ;
**caractérisé en ce que** le procédé comprend :
le fait que l'élément de passerelle de service de messages courts met en oeuvre une négociation (S2) avec l'élément de routage de service de messages courts (40) de manière à déterminer la valeur de temporisateur en tant que valeur de temporisateur négociée selon laquelle l'élément de passerelle de service de messages courts envoie (S21) une requête demandant une proposition de valeur de temporisateur à l'élément de routage de service de messages courts (40), reçoit (S22) une réponse qui inclut une proposition de valeur de temporisateur depuis l'élément de routage de service de messages courts (40), et décide (S23) d'une valeur de temporisateur sur la base de ladite proposition de valeur de temporisateur.

2. Procédé selon la revendication 1, dans lequel ladite valeur de temporisateur négociée est transférée (S3) audit élément de routage de service de messages courts (40) en association avec ledit message.

3. Procédé selon la revendication 2, comprenant le fait de décider d'une valeur de temporisateur conformément à ladite proposition de valeur de temporisateur.

4. Procédé selon la revendication 2, comprenant le fait de décider d'une valeur de temporisateur inférieure à ladite proposition de valeur de temporisateur.

5. Procédé selon l'une quelconque des revendications 1 à 4, dans lequel ledit élément de routage de service de messages courts (40) comprend un routeur de service de messages courts ou une passerelle de messages courts de protocole Internet.

6. Procédé selon l'une quelconque des revendications 1 à 5, comprenant la réception d'une réponse au niveau d'un centre de commutation de mobile de passerelle de service de messages courts (20).

7. Procédé selon l'une quelconque des revendications 2 à 6, dans lequel ladite requête demandant une proposition de valeur de temporisateur inclut en outre une indication pour le support d'un mécanisme de renégociation de valeur de temporisateur.

8. Procédé selon l'une quelconque des revendications 2 à 7, comprenant en outre :
la réception (S12) d'une requête demandant une renégociation de valeur de temporisateur depuis ledit élément de routage de service de messages courts (40) ; et
l'envoi (S13) d'une réponse accusant réception de la renégociation de valeur de temporisateur audit élément de routage de service de messages courts (40).

9. Procédé selon la revendication 7 ou 8, dans lequel ladite renégociation de valeur de temporisateur comprend le redémarrage dudit temporisateur.

10. Procédé selon la revendication 8 ou 9, comprenant en outre :
le fait de décider d'une seconde valeur de temporisateur ; et
le redémarrage dudit temporisateur avec ladite seconde valeur de temporisateur décidée ; dans lequel :
ladite réponse accusant réception de la renégociation de valeur de temporisateur comprend en outre ladite seconde valeur de temporisateur décidée.

11. Procédé, comprenant :
un élément de routage de service de messages courts qui reçoit (S21) une requête demandant une proposition de valeur de temporisateur de délivrance de messages courts depuis un élément de passerelle de service de messages courts (20) ;
l'élément de routage de service de messages courts dérivant une proposition de valeur de temporisateur de délivrance de messages courts ; et
l'élément de routage de service de messages courts envoyant (S22) une réponse qui inclut ladite proposition de valeur de temporisateur de délivrance de messages courts audit élément de passerelle de service de messages courts (20).

12. Procédé selon la revendication 11, dans lequel ladite dérivation est basée sur le nombre et le type de routes de délivrance disponibles.

13. Procédé selon l'une quelconque des revendications 11 ou 12, dans lequel ladite requête demandant une proposition de valeur de temporisateur inclut en outre une indication pour le support d'un mécanisme de renégociation de valeur de temporisateur, le procédé comprenant en outre :
l'envoi (S12) d'une requête demandant une renégociation de valeur de temporisateur audit élément de passerelle de service de messages courts (20) ; et
la réception (S13) d'une réponse accusant réception de la renégociation de valeur de temporisateur depuis ledit élément de passerelle de service de messages courts (20).

14. Procédé selon la revendication 13, dans lequel ladite renégociation de valeur de temporisateur comprend le redémarrage dudit temporisateur.

15. Procédé selon la revendication 13 ou 14, dans lequel ladite requête demandant une renégociation de valeur de temporisateur comprend en outre une seconde valeur de temporisateur proposée.

16. Procédé selon l'une quelconque des revendications 1 à 15, dans lequel au moins l'une desdites requêtes et réponses comprend un message de protocole de partie d'application de mobile.

17. Élément de service de messages courts (20) adapté de manière à ce qu'il réalise un procédé selon l'une quelconque des revendications 1 à 10 ou selon l'une quelconque des revendications 11 à 16.

18. Système comprenant un élément de passerelle de service de messages courts (20) selon la revendication 17 lorsqu'elle dépend de l'une quelconque des revendications 1 à 10 et un élément de routage de service de messages courts (40) selon la revendication 17 lorsqu'elle dépend de l'une quelconque des revendications 11 à 16.

19. Produit programme d'ordinateur comprenant des moyens de code de programme qui sont adaptés de manière à ce qu'ils réalisent les étapes d'un procédé selon l'une quelconque des revendications 1 à 10 ou selon l'une quelconque des revendications 11 à 17.
